# EUROPEAN PATENT APPLICATION

(11) **EP 1 396 478 A1**
(43) Date of publication of application: **10.03.2004**
(21) Application number: 02256122.9
(22) Date of filing: 03.09.2002
(51) Int. Cl.: C03C 17/22, A45D 42/08, A45D 34/06

(54) **Fluid dispenser with anti-fogging mirror**

(71) Applicant: The Procter & Gamble Company, Cincinnati, Ohio 45202 (US)
(72) Inventor: Hill, Simon David Julian, West Byfleet, Surrey KT14 6PH (GB)
(74) Representative: Wilding, Richard Alan

(57) **Abstract**

A fluid dispenser comprising an anti-fogging mirror for use in environments that usually result in visible water condensate formation on mirrored surfaces is provided.

## Description

### FIELD

The present invention relates to the field of cosmetic fluid dispensers.

### BACKGROUND

It is recognised that whilst showering or bathing consumers may wish to dispense various fluids such as shaving foam or facial creams for application to the body, especially the face. A fluid dispenser with integrated mirror would enable application of the fluid and subsequent activities to be undertaken in the confines of the showering or bathing area. However, due to the inherent humidity of the environment, a visible layer of water condensate may form, causing mirrors to become "fogged", making it difficult to apply fluids to the face and to carry out subsequent activities, especially shaving.

It is known that mirrors may be de-fogged by means of passing heated water across the back of the mirror thereby elevating the temperature of the mirror to at least that of the surrounding environment and preventing condensation - see, for example, US 4,733,468. Such devices require complex plumbing arrangements attached to the non-mirrored surface of the mirror, and/or containers for storing volumes of heated water in contact with the non-mirrored surface. Additionally, these devices require connection to, or supply of, heated water, limiting their application and use.

Examples exist of mirrors with anti-fogging properties that result from the physical or chemical modification of the mirrored surface. US 4,400,157 teaches that a mirror may be rendered anti-fogging by the repeated application of a solution of 0.1% (v/v) dimethyl benzyl ammonium chloride. WO01/73483 A1 describes the use of a nylon pad to generate a static field across the surface of a hand-held mirror that results in the mirror having temporary anti-fogging properties. Both of these treatments are extremely short lived, resulting in the mirror rapidly losing its anti-fogging properties, thereby necessitating the frequent re-administration of the treatment. As a result, these treatments are not suitable for production of a permanently anti-fogging product.

Based on the foregoing, there is a need for a fluid dispenser having a permanent antifogging mirror.

### SUMMARY

The present invention is directed towards a fluid dispenser comprising an anti-fogging mirror.

Herein, "fluid" includes flowable materials such as liquids, gels, powders and pastes.

Herein, an "anti-fogging mirror" includes mirrors, the reflective surface of which, has been treated, for example by coating with a film of treatment material, so as to permanently reduce the formation of visible water condensate on the treated surfaces compared with the untreated material, whereby the treatment does not measurably impair the reflective properties of the surface.

As used herein, the word "permanent" when used in relation to the ability to reduce formation of visible water condensate, includes treatments that result in the anti-fogging properties remaining substantially undiminished for at least the usable life-span of the product, preferably for at least 1 year, more preferably at least 3 years.

The art of which the present inventors are aware appears to have ignored the possibility of providing a dispenser with an anti-fogging mirror, preferring to address issues, such as shaving in humid environments, by providing permanently plumbed-in devices as discussed hereinabove. The advantages of the present invention are manifold - it is very portable, so may be taken anywhere and used in humid environments where no anti-fogging mirror is present. It may also be placed in places such as a shower in which it would otherwise be very difficult to provide a permanent anti-fogging mirror.

According to a preferred embodiment, the present invention may further comprise a fluid dispenser wherein said anti-fogging mirror is coated by a nanoparticle film to provide anti-fogging properties. Advantageously, the coating may comprise natural clay, synthetic clay or a mixture of these materials.

Herein, "nanoparticle" includes a film comprising one or more particulate materials, wherein the particles preferably have a diameter of 400nm or less, more preferably from about 1 nm to about 400 nm. The particulate materials may comprise metal oxides, silicates, carbonates, hydroxides or mixtures thereof, such as natural clay and synthetic clay.

According to another preferred embodiment, the anti-fogging mirror is releasably attached to the fluid dispenser.

According to another preferred embodiment, the anti-fogging mirror is curved to enable magnification of viewing area.

According to another preferred embodiment, the fluid dispenser comprises means to attach the fluid dispenser to a surface, especially a wall or shower unit.

According to another preferred embodiment, the fluid dispenser additionally comprises means to attach a razor thereto.

According to another preferred embodiment, the fluid dispenser additionally comprises means for storing spare razor heads.

According to another preferred embodiment, the fluid dispenser comprises means to separately contain and dispense two or more types of fluid.

According to another preferred embodiment the fluid dispenser comprises means to separately contain and dispense two or more types of fluid and mix the fluids together upon dispensing.

These and other features, aspects, and advantages of the present invention will become evident to those skilled in the art from a reading of the present disclosure.

### BRIEF DESCRIPTION OF THE DRAWINGS

While the specification concludes with claims which particularly point out and distinctly claim the invention, it is believed the present invention will be better understood from the following description of preferred embodiments taken in conjunction with the accompanying drawings, in which like reference numerals identify identical elements and in which:
Fig. 1 illustrates a front elevation of a preferred embodiment of the present invention.
Fig. 2 illustrates a side elevation of the embodiment of figure 1.
Fig. 3 illustrates an angled perspective view of the embodiment of figure 1.
Fig. 4 illustrates a top elevation of the embodiment of figure 1.
Fig. 5. illustrates a bottom elevation of the embodiment of figure 1.

### DETAILED DESCRIPTION

All cited references are incorporated herein by reference in their entireties.
Except where specific examples of actual measured values are presented, numerical values referred to herein should be considered to be qualified by the word "about".

The fluid dispenser of the present invention may have any size and shape to allow the storage and dispensing of contained fluids. In the case of a cosmetic fluid, the volume of the container will typically not exceed 1000ml, preferable not more than 500ml and more preferably not more than 400ml. The fluid dispenser may be constructed from man-made or natural materials. The man-made materials may comprise metal, including metal alloys, synthetic polymers or mixtures of these. Preferred polymeric materials include high density polyethylene, low density polyethylene, polypropylene, polyethylene terephthalate and mixtures of these. Preferred manufacturing techniques for the container include injection moulding, blow moulding and combinations thereof. In addition, the dispenser may be configured to contain pressurized fluids, i.e. at pressures above atmospheric pressure. It may, for example be configured as an aerosols canister.

The fluid dispenser of the present invention may comprise any fluid, such as liquids, gels, powders and pastes or a mixture of these. Preferably, the dispenser comprises one or more cosmetic fluids, selected from shaving foam, shaving gel, skin lotion, body wash, dentifrice, and other cleansing or cosmetic fluids. More preferably, the dispenser comprises shaving foam.

The present invention may comprise more than one fluid held discretely within separate containers within the fluid dispenser. The fluid dispenser may be configured to dispense these fluids separately, both spatially and temporally, or just spatially, or in a way that effects mixing on expulsion from the dispensing orifice.

The fluid dispenser of the present invention may comprise control means for preventing and controlling the release of fluids through the dispensing orifice. These control means may comprise a valve, a cap or both. Furthermore, flow control may be achieved by a combination of a high viscosity fluid, a small dispensing orifice and the application of pressure to overcome the inability of the fluid to pass through the orifice under the influence of gravity alone. In the event that the control means comprise a valve, the valve may be a ball valve, a tap valve, spring valve or a silicone slit valve. Preferably, the control means comprise a silicone slit valve. The valve may be housed in a plastic closure and screwed or snap-fitted to the dispenser. The valve may also be co-moulded into the container during manufacturing. In the event that the flow control means comprise a cap, the cap may be fixedly or releasably attached to the fluid dispenser. If fixedly attached, it may be attached by means of a hinge or attached via a snap-fit.

Fluid dispensing may be achieved by a number of methods. These methods include gravity. In this case, the dispensing orifice will be oriented, in use, to face downwards and flow control will typically be by means of a cap and/or a valve. A further method includes application of external pressure. In such a case, the dispenser may be manufactured, at least in part, of flexible material allowing a user to squeeze it and force out fluid. Alternatively or in addition, the dispenser may comprise a pump. The pump may be operated by a push button or push zone. In this case, flow control may be achieved by varying the application pressure. Alternatively or additionally, flow control may be achieved by means of a cap and/or a valve. A further method of dispensing fluid is by release of pressure in the case where the dispenser is pressurized, such as by depressing an aerosol nozzle.

The fluid dispenser of the present invention comprises an anti-fogging mirror. The mirror may comprise reflective material such as metal, metallised glass, metallised plastic, other reflective plastic or a mixture of these materials. The mirror may comprise one continuous piece of reflective material or an arrangement of multiple sections of such material, but preferably comprises one continuous piece. The mirror may have any shape that enables a consumer to use it for the intended purpose, such as shaving - examples include circular, oval, rectangular and other polygonal shapes. The total reflective area of the mirror is preferably from about 2 cm² to about 300 cm², more preferably from about 4 cm² to about 100 cm², more preferably still from about 8 cm² to about 50 cm², and yet more preferably more than or equal to 9 cm². The anti-fogging mirror may be rigid or flexible.
Examples of anti-fogging treatments include:
a) Application of a hydrophilic nanoparticle film is disclosed in US 02/0045010 A1. The nanoparticles may comprise metal oxides, silicates, carbonates, hydroxides, or mixtures thereof such as natural clays and synthetic clays. The particles preferably have a diameter of 400nm or less, more preferably from about 1 nm to about 400 nm. Advantageously, the nanoparticles are in the form of synthetic clays. More advantageously, the nanoparticles are in the form of synthetic hectorite, such as Laponite™ from Southern Clay Products Inc., which has the formula:

   [Mg_{w}LiₓSi₈O₂₀OH_{4-y}F_{y}]^{z-}

   where w = 3 to 6, x = 0 to 3, y = 0 to 4, z = 12-2w-x and the overall negative lattice charge is balanced by counter ions; and wherein the counter-ions are selected from the group consisting of selected Na⁺, K⁺, NH₄⁺, Cs⁺, Li⁺, Mg⁺⁺, Ca⁺⁺, Ba⁺⁺, N(CH₃)⁺ and mixtures thereof.
   Advantageously, the substantivity of the nanoparticles is increased by heat curing, as disclosed in US2002/0028288 A1.
b) Application of a combination of photocatalytic metallic oxide, silica- or silicone resin- film forming precursors and solvents as disclosed in US 6,165,256.
c) Film coatings of polyurethane and hydrophilic polyacrylic as disclosed in US 3,935,367.
d) Application of combinations of hydroxyalkyl acrylate or methylacrylate and organosiloxane-oxyalkylene block copolymers as disclosed in US 3,933,407.
e) Application of a transparent label films impregnated with surfactants.
f) Application of colloidal silica particles, colloidal alumina particles or mixtures thereof, as disclosed in EP 0 052 427.

As far as the present inventor is aware, these treatments have not previously been used on mirrors.

The anti-fogging mirror may be incorporated into the fluid dispenser such that it is fixedly or releasably attached. Fixed attachment of the mirror may be achieved by moulding the fluid dispenser out of one piece of plastic, gluing the mirror to the fluid dispenser or heat-sealing the mirror to the fluid dispenser. Moulding allows the fluid dispenser to be made as one whole unit.

Means for releasably attaching the mirror to the dispenser may comprise hinges, clasps, clips and sliding grooves on the fluid dispenser. This allows the mirror to be sold separately and then transferred from one fluid dispenser to another.

The anti-fogging mirror may also be curved or partially curved, preferably with concave curvature allowing magnification of the viewing area, thereby facilitating more accurate shaving, for example.

The fluid dispenser of the present invention may further include means of attachment to a surface, preferably a wall or shower unit. The attachment means may comprise a rubber suction cup, adhesive strips, adhesive foam pads, rope or plastic tang for hanging from a hook, or screw fixtures. Preferably the attachment means comprise a suction cup. Attachment means enable the fluid dispenser to be placed on a wall within the shower or bath area at a height that enables the consumer to view his or her reflection most efficiently. It also results in the consumer having both hands free to undertake tasks, such as shaving.

The fluid dispenser of the present invention may comprise means of attaching for a razor thereto. These may comprise a hook, a clasp or a stand, preferably a clasp.

Furthermore, the fluid dispenser of the present invention may comprise means for storing spare razor heads, such as clips, clasps, racks and dispensing racks. Preferably, the storage means comprises a dispensing rack.

The following example further describes and demonstrates a preferred embodiment within the scope of the present invention. The example is given solely for the purpose of illustration, and is not to be construed as a limitation of the present invention since many variations thereof are possible without departing from its scope.

### Example 1

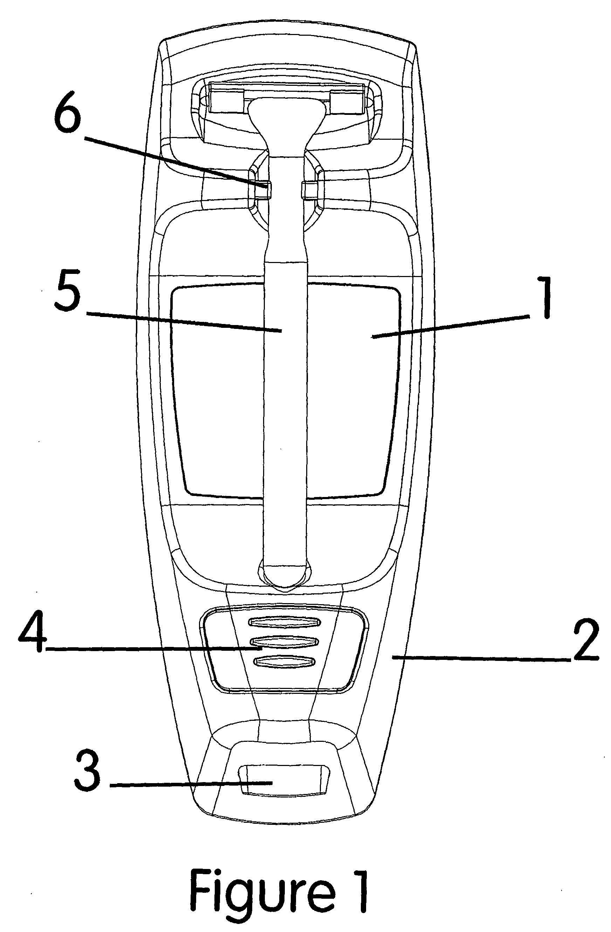

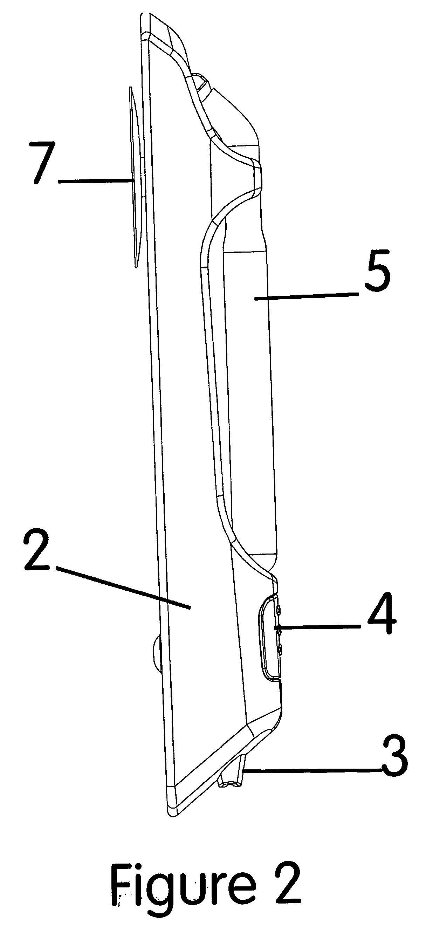

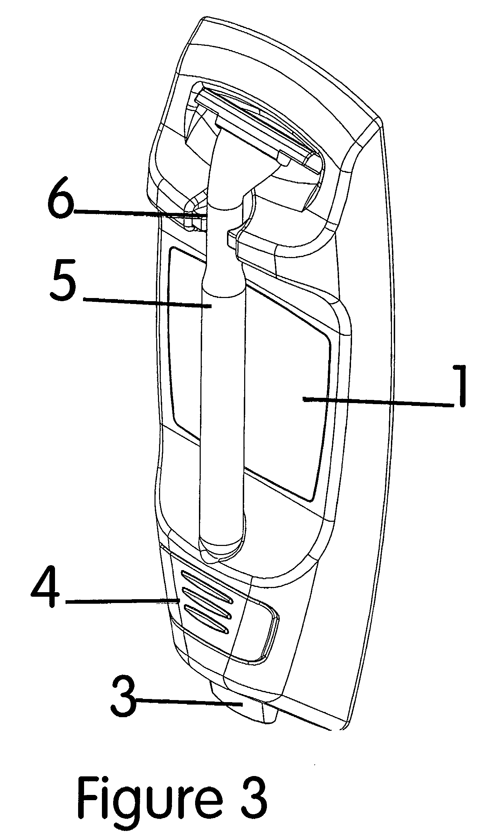

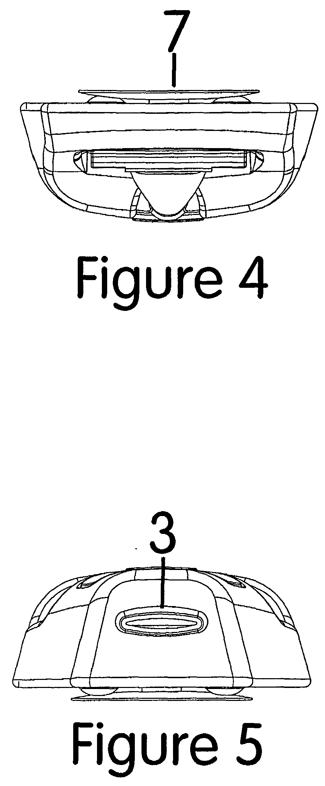

With reference to figures 1 to 4, a fluid dispenser comprising an anti-fogging mirror (1) is presented. The anti-fogging mirror (1) comprises a piece of reflective plastic with an area of 9 cm² that is coated with a hydrophilic nanoclay. The mirror is glued to the fluid dispenser. The dispenser is moulded from polypropylene and has approximate dimensions of 12 cm along the longitudinal axis, 4 cm in width and 2 cm in depth. The fluid is contained within the fluid container (2) and is dispensed through the dispensing orifice (3). The dispensing of the fluid through the dispensing orifice (3) is effected and controlled by the push button (4). A razor (5) is presented attached to the fluid dispenser via the razor clasp (6). Once the razor is removed for use, the anti-fogging mirror (1) is unobstructed. A suction cup (7) for attaching the fluid dispenser to a surface is provided.

It is understood that the examples and embodiments described herein are for illustrative purposes only and that various modifications or changes in light thereof will be suggested to one skilled in the art without departing from the scope of the present invention.

## Claims

1. A fluid dispenser comprising an anti-fogging mirror.

2. A fluid dispenser according to claim 1, wherein said anti-fogging mirror is coated with a nanoparticle film to provide anti-fogging properties.

3. A fluid dispenser according to claim 2, wherein the nanoparticle film comprises natural clay, synthetic clay or a mixtures of these materials.

4. A fluid dispenser according to any one of the preceding claims wherein said anti-fogging mirror is releasably attached to the fluid dispenser.

5. A fluid dispenser according to any one of the preceding claims wherein said anti-fogging mirror is curved to enable magnification of the viewing area.

6. A fluid dispenser according to any one of the preceding claims comprising means to attach the fluid dispenser to a surface, especially a wall or shower unit.

7. A fluid dispenser according to any one of the preceding claims comprising means to attach a razor thereto.

8. A fluid dispenser according to any one of the preceding claims comprising means for storing spare razor heads.

9. A fluid dispenser according to any one of the preceding claims comprising the means to separately contain and dispense two or more types of fluid.

10. A fluid dispenser according to claim 9 comprising means to mix the two or more fluids upon dispensing.
